(19) Europäisches Patentamt
European Patent Office
Office européen des brevets

(11) EP 2 201 049 B1

(12) **EUROPEAN PATENT SPECIFICATION**

(45) Date of publication and mention of the grant of the patent:
**31.05.2017 Bulletin 2017/22**

(21) Application number: **08839744.3**

(22) Date of filing: **02.10.2008**

(51) Int Cl.:
***C08F 210/06*** (2006.01) ***C08F 4/646*** (2006.01)
***C08F 4/651*** (2006.01)

(86) International application number:
**PCT/EP2008/063243**

(87) International publication number:
**WO 2009/050045 (23.04.2009 Gazette 2009/17)**

(54) **PROCESS FOR THE PREPARATION OF HIGH FLUIDITY PROPYLENE POLYMERS**

VERFAHREN FÜR DIE HERSTELLUNG VON PROPYLENPOLYMEREN MIT HOHER FLUIDITÄT

PROCÉDÉ DE PRÉPARATION DE POLYMÈRES DE PROPYLÈNE TRÈS FLUIDES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.10.2007 EP 07118446**
**18.10.2007 US 999436 P**

(43) Date of publication of application:
**30.06.2010 Bulletin 2010/26**

(73) Proprietor: **Basell Poliolefine Italia S.r.l.**
**20127 Milano (IT)**

(72) Inventors:
- **MASSARI, Paola**
**I-44100 Ferrara (IT)**
- **CIARAFONI, Marco**
**I-44100 Ferrara (IT)**
- **FUSCO, Ofelia**
**I-44100 Ferrara (IT)**
- **MURAKAMI, Hirofumi**
**Kawasaki 210-0863 (JP)**
- **NAKAJIMA, Takeshi**
**Kawasaki 210-0863 (JP)**
- **TAKEMIYA, Shintaro**
**Kawasaki 210-0863 (JP)**

(74) Representative: **Giberti, Stefano et al**
**Basell Poliolefine Italia S.r.l.**
**Intellectual Property**
**P.le G. Donegani 12**
**44100 Ferrara (IT)**

(56) References cited:
**EP-A- 0 086 473** **EP-A- 0 640 624**
**WO-A-03/054035**

- **DATABASE CA [Online] CHEMICAL ABSTRACTS SERVICE, COLUMBUS, OHIO, US; MURAMARU, SO ET AL MURAMARU, SO ET AL: "Stable manufacture of propylene block copolymers with good softness and impact resistance Stable manufacture of propylene block copolymers with good softness and impact resistance" XP002509328 retrieved from STN Database accession no. 1994:681456 & JP 06 145269 A (TOSOH CORP, JAPAN TOSOH CORP, JAPAN) 24 May 1994 (1994-05-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 201 049 B1

## Description

The present invention relates to a process for the production of propylene polymers having a Melt Flow rate (230°C, 2.16 Kg) higher than 30 g/10' and preferably higher than 50 g/10' and also characterized by having broad molecular weight distribution (MWD).

The molecular weight distribution is an important parameter for the behavior of propylene polymers. In general terms broadening of the molecular weight distribution brings an improvement in terms of polymer processability (easiness of extrusion and in general flowability) and in terms of mechanical properties (higher flexural modulus).

One of the preferred ways to obtain polymers with broad molecular weight distribution is to use catalyst systems that are intrinsically able to impart such a property to the polymer. WO00/63261 is representative of a document describing a Ziegler-Natta catalyst system able to provide polymers with broad MWD, which is based on (a) a catalyst component containing Mg, Ti, Cl and a succinate as internal donor, (b) an aluminum alkyl and (c) an external electron donor compound.

In the document EP 640624 it is disclosed a class of silicon compounds useful as external donors having formula $(R^1O)_3Si\text{-}C(CH_{3)2}\text{-}CH(R^2)(R^3)$ where each of$R^1$, $R^2$ and $R^3$ are C1-C3 hydrocarbon groups. Catalyst systems based on these external donors are said to provide high activity, stereoregularity and higher melting point.

On the other hand, in WO02/30998 it is disclosed a catalyst system comprising (a) a catalyst component containing Mg, Ti, Cl and two internal electron donors having different extractability features, one selected from succinates and the other one selected from phthalates, (b) and aluminum alkyl and (c) an external electron donor compound. The external electron donor can be selected from monoalkyltrialkoxysilanes in order to produce polymers with a lower crystallinity.

None of these documents is concerned with the problem of producing propylene polymers having at the same time broad MWD and high melt flow rate. In certain applications in fact, particularly in thin wall injection molding (TWIM) it is necessary to use polymers with relatively high fluidity i.e., with a relatively lower molecular weight in order to have high quality moldings.

The low molecular weight polymers are commonly obtained by increasing the content of the chain transfer agent (molecular weight regulator). As the commonly used molecular weight regulator is hydrogen which is gaseous at the conventional polymerization conditions, its high content in the polymerization mixture increases the pressure of the reaction system making it necessary the use of equipments especially designed to withstand to higher pressure and thus more expensive. A possible solution, particularly for liquid-phase polymerization, would be to run that the plant at a lower temperature which can allow a reduced pressure, but this negatively impacts the efficiency of heat exchange and the relative plant productivity. Therefore, it would be necessary to have a catalyst system showing an improved hydrogen response, i.e., capability of producing polymers with a lower molecular weight in the presence of small amounts of hydrogen. Examples of catalysts having high hydrogen response are the Ziegler-Natta catalysts containing 1,3-diethers described for example in EP622380. Such catalysts however, are able to produce propylene polymers with high melt flow rates only in conjunction with narrow molecular weight distribution and therefore do not solve the problem.

EP 86473 discloses a process for the preparation of propylene polymers wherein the catalyst system can comprise succinates as internal donor and silico0n compounds as external donor among the silicon compounds cited alkyl alkoxy silanes are generically disclosed.

EP 640624 describes catalyst systems comprising a class of silicon compounds useful as external donors having formula $(R_1O)_3Si\text{-}C(CH_3)_2\text{-}CH(R^2)(R^3)$ where each of R1, R2 and R3 are $C_1$-$C_3$ hydrocarbon groups.

The applicant has found that the selection of a specific type of catalyst system is able to solve the aforementioned problem. It is therefore an object of the present invention a process for the preparation of propylene polymers as described in claim 1

The solid catalyst component comprises Mg, Ti, halogen and an electron donor selected from succinates of formula (I):

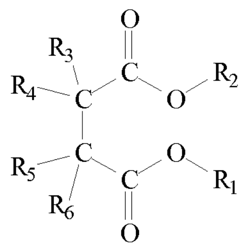

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group,

optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl. One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Specific examples of suitable monosubstituted succinate compounds are Diethyl sec-butylsuccinate, Diethyl thexylsuccinate, Diethyl cyclopropylsuccinate, Diethyl norbornylsuccinate, Diethyl perihydrosuccinate, Diethyl trimethylsilylsuccinate, Diethyl methoxysuccinate, Diethyl p-methoxyphenylsuccinate, Diethyl p-chlorophenylsuccinate diethyl phenylsuccinate, diethyl cyclohexylsuccinate, diethyl benzylsuccinate, diethyl cyclohexylmethylsuccinate, diethyl t-butylsuccinate, diethyl isobutylsuccinate, diethyl isopropylsuccinate, diethyl neopentylsuccinate, diethyl isopentylsuccinate, diethyl (1-trifluoromethylethyl)succinate, diethyl fluorenylsuccinate, 1-(ethoxycarbo diisobutyl phenylsuccinate, Diisobutyl sec-butylsuccinate, Diisobutyl thexylsuccinate, Diisobutyl cyclopropylsuccinate, Diisobutyl norbornylsuccinate, Diisobutyl perihydrosuccinate, Diisobutyl trimethylsilylsuccinate, Diisobutyl methoxysuccinate, Diisobutyl p-methoxyphenylsuccinate, Diisobutyl p-chlorophenylsuccinate, diisobutyl cyclohexylsuccinate, diisobutyl benzylsuccinate, diisobutyl cyclohexylmethylsuccinate, diisobutyl t-butylsuccinate, diisobutyl isobutylsuccinate, diisobutyl isopropylsuccinate, diisobutyl neopentylsuccinate, diisobutyl isopentylsuccinate, diisobutyl (1-trifluoromethylethyl)succinate, diisobutyl fluorenylsuccinate, Dineopentyl sec-butylsuccinate, Dineopentyl thexylsuccinate, Dineopentyl cyclopropylsuccinate, Dineopentyl norbornylsuccinate, Dineopentyl perihydrosuccinate, Dineopentyl trimethylsilylsuccinate, Dineopentyl methoxysuccinate, Dineopentyl p-methoxyphenylsuccinate, Dineopentyl p-chlorophenylsuccinatedineopentyl phenylsuccinate, dineopentyl cyclohexylsuccinate, dineopentyl benzylsuccinate, dineopentyl cyclohexylmethylsuccinate, dineopentyl t-butylsuccinate, dineopentyl isobutylsuccinate, dineopentyl isopropylsuccinate, dineopentyl neopentylsuccinate, dineopentyl isopentylsuccinate, dineopentyl (1-trifluoromethylethyl)succinate, dineopentyl fluorenylsuccinate. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred. Specific examples of suitable disubstituted succinates are: diethyl 2-,2-dimethylsuccinate, diethyl 2-ethyl-2-methylsuccinate, diethyl 2-Benzyl-2-isopropylsuccinate, Diethyl 2-cyclohexylmethyl-2-isobutylsuccinate, Diethyl 2-cyclopentyl-2-n-butyl succinate, Diethyl 2,2-diisobutylsuccinate, Diethyl 2-cyclohexyl-2-ethylsuccinate, Diethyl 2-isopropyl-2-methylsuccinate, Diethyl 2-tetradecyl-2 ethyl succinate, Diethyl 2-isobutyl-2-ethylsuccinate, Diethyl 2-(1-trifluoromethyl-ethyl)-2-methylsuccinate, Diethyl 2-isopentyl-2-isobutylsuccinate, Diethyl 2-phenyl 2-n-butylsuccinate, diisobutyl 2-,2-dimethylsuccinate, diisobutyl 2-ethyl-2-methylsuccinate, Diisobutyl 2-benzyl-2isopropylsuccinate, Diisobutyl 2-cyclohexylmethyl-2-isobutylsuccinate, Diisobutyl 2-cyclopentyl-2-n-butylsuccinate, Diisobutyl 2,2-diisobutylsuccinate, Diisobutyl 2-cyclohexyl-2-ethylsuccinate, Diisobutyl 2-isopropyl-2-methylsuccinate, Diisobutyl 2-tetradecyl-2-ethylsuccinate, Diisobutyl 2-isobutyl-2-ethylsuccinate, Diisobutyl 2-(1-trifluoromethyl-ethyl)-2-methylsuccinate, Diisobutyl 2-isopentyl-2-isobutylsuccinate, Diisobutyl 2-phenyl 2-nButyl-succinate, dineopentyl 2-,2-dimethylsuccinate, dineopentyl 2-ethyl-2-methylsuccinate, Dineopentyl 2-Benzyl-2isopropylsuccinate, Dineopentyl 2-cyhexylmethyl-2-isobutylsuccinate, Dineopentyl 2-cyclopentyl-2-n-butylsuccinate, Dineopentyl 2,2-diisobutylsuccinate, Dineopentyl 2-cyclohexyl-2-ethylsuccinate, Dineopentyl 2-isopropyl-2-methylsuccinate, Dineopentyl 2-tetradecyl-2 ethylsuccinate, Dineopentyl 2-isobutyl-2-ethylsuccinate, Dineopentyl 2-(1-trifluoromethyl-ethyl)-2-methylsuccinate, Dineopentyl 2-isopentyl-2-isobutylsuccinate, Dineopentyl 2-phenyl 2-n-butylsuccinate.

Furthermore, also the compounds in which at least two radicals different from hydrogen are linked to different carbon atoms, that is $R_3$ and $R_5$ or $R_4$ and $R_6$ are particularly preferred. Specific examples of suitable compounds are Diethyl 2,3bis(trimethylsilyl)succinate, Diethyl 2,2-secbutyl-3-methylsuccinate, Diethyl 2-(3,3,3,trifluoropropyl)-3-methylsuccinate, Diethyl 2,3 bis(2-ethyl-butyl)succinate, Diethyl 2,3-diethyl-2-isopropylsuccinate, Diethyl 2,3-diisopropyl-2-methylsuccinate, Diethyl 2,3-dicyclohexyl-2-methyl diethyl 2,3-dibenzylsuccinate, diethyl 2,3-diisopropylsuccinate, diethyl 2,3-bis(cyclohexylmethyl)succinate, Diethyl 2,3-di-t-butylsuccinate, Diethyl 2,3-diisobutylsuccinate, Diethyl 2,3-di neopentylsuccinate, Diethyl 2,3-diisopentylsuccinate, Diethyl 2,3-(1-trifluoromethyl-ethyl)succinate, Diethyl 2,3-tetradecylsuccinate, Diethyl 2,3-fluorenylsuccinate, Diethyl 2-isopropyl-3-isobutylsuccinate, Diethyl 2-terbutyl-3-isopropylsuccinate, Diethyl 2-ipropyl-3-cyclohexylsuccinate, Diethyl 2-isopentyl-3-cyclohexylsuccinate, Diethyl 2-tetradecyl-3-cyclohexylmethylsuccinate, Diethyl 2-cyclohexyl-3-cyclopentylsuccinate. Diisobutyl 2,3-diethyl-2-isopropylsuccinate, Diisobutyl 2,3-diisopropyl-2-methylsuccinate, Diisobutyl 2,3-dicyclohexyl-2-methyl,diisobutyl 2,3-dibenzylsuccinate, diisobutyl 2,3-diisopropylsuccinate, , diisobutyl 2,3-bis(cyclohexylmethyl)succinate, Diisobutyl 2,3-di-t-butylsuccinate, Diisobutyl 2,3-diisobutylsuccinate, Diisobutyl 2,3-dineopentylsuccinate, Diisobutyl 2,3-diisopentylsuccinate, Diisobutyl 2,3-(1-trifluoromethyl-ethyl)succinate, Diisobutyl 2,3-tetradecylsuccinate, Diisobutyl 2,3-fluorenylsuccinate, Diisobutyl

2-ipropyl-3-ibutylsuccinate, Diisobutyl 2-terbutyl-3-ipropylsuccinate, Diisobutyl 2-ipropyl-3-cyclohexylsuccinate, Diisobutyl 2-isopentyl-3-cyclohexylsuccinate, Diisobutyl 2-tetradecyl-3-cyclohexylmethylsuccinate, Diisobutyl 2-cyclohexyl-3-cyclopentylsuccinate, Dineopentyl 2,3bis(trimethylsilyl)succinate, Dineopentyl 2,2-secbutyl-3-methylsuccinate, Dineopentyl 2-(3,3,3,trifluoropropyl)-3-methylsuccinate, Dineopentyl 2,3 bis(2-ethyl-butyl)succinate, Dineopentyl 2,3-diethyl-2-isopropylsuccinate, Dineopentyl 2,3-diisopropyl-2-methylsuccinate, Dineopentyl 2,3-dicyclohexyl-2-methyl,

dineopentyl 2,3-dibenzylsuccinate, dineopentyl 2,3-diisopropylsuccinate, dineopentyl 2,3-bis(cyclohexylmethyl)succinate, Dineopentyl 2,3-di-t-butylsuccinate, Dineopentyl 2,3-diisobutylsuccinate, Dineopentyl 2,3-dineopentylsuccinate, Dineopentyl 2,3-diisopentylsuccinate, Dineopentyl 2,3-(1-trifluoromethyl-ethyl)succinate, Dineopentyl 2,3-tetradecylsuccinate, Dineopentyl 2,3-fluorenylsuccinate, Dineopentyl 2-ipropyl-3-ibutylsuccinate, Dineopentyl 2-terbutyl-3-isopropylsuccinate, Dineopentyl 2-isopropyl-3-cyclohexylsuccinate, Dineopentyl 2-isopentyl-3-cyclohexylsuccinate, Dineopentyl 2-tetradecyl-3-cyclohexylmethyl succinate, Dineopentyl 2-cyclohexyl-3-cyclopentylsuccinate.

Particularly preferred are the solid catalyst components in which the Ti atoms derive from a titanium compound which contains at least one Ti-halogen bond and the Mg atoms derive from magnesium chloride. In a still more preferred aspect both the titanium compound and the electron donor of formula (I) are supported on magnesium dichloride. Preferably, in the catalyst of the present invention at least 70% of the titanium atoms and more preferably at least 90% of them, are in the +4 valence state.

In a particular embodiment, the magnesium dichloride is in active form. The active form of magnesium dichloride present in the catalyst components of the invention is recognizable by the fact that in the X-ray spectrum of the catalyst component the major intensity reflection which appears in the spectrum of the non-activated magnesium dichloride (having usually surface area smaller than 3 $m^2/g$) is no longer present, but in its place there is a halo with the position of the maximum intensity shifted with respect to the position of the major intensity reflection, or by the fact that the major intensity reflection presents a half-peak breadth at least 30% greater that the one of the corresponding reflection of the non-activated Mg dichloride. The most active forms are those in which the halo appears in the X-ray spectrum of the solid catalyst component.

In the case of the most active forms of magnesium dichloride, the halo appears in place of the reflection which in the spectrum of the non-activated magnesium chloride is situated at the interplanar distance of 2.56 Å.

Preferred titanium compounds are the halides or the compounds of formula $TiX_n(OR^1)_{4-n}$, where $1 \leq n \leq 3$, X is halogen, preferably chlorine, and $R^1$ is $C_1$-$C_{10}$ hydrocarbon group. Especially preferred titanium compounds are titanium tetrachloride and the compounds of formula $TiCl_3OR^1$ where $R^1$ has the meaning given above and in particular selected from methyl, n-butyl or isopropyl.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 °C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130°C and kept at this temperature for 0.5-2 hours. The treatment with $TiCl_4$ can be carried out one or more times. The internal donor can be added during the treatment with $TiCl_4$ and the treatment with the electron donor compound can be repeated one or more times. Generally, the succinate of formula (I) is used in molar ratio with respect to the $MgCl_2$ of from 0.01 to 1 preferably from 0.05 to 0.5. The preparation of catalyst components in spherical form is described for example in European patent application EP-A-395083 and in the International patent application WO98/44009. The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000Å generally ranges from 0.3 to 1.5 $cm^3/g$, preferably from 0.45 to 1 $cm^3/g$.

A further method to prepare the solid catalyst component of the invention comprises halogenating magnesium dihydrocarbyloxide compounds, such as magnesium dialkoxide or diaryloxide, with solution of TiCk in aromatic hydrocarbon (such as toluene, xylene) at temperatures between 80 and 130°C. The treatment with TiCk in aromatic hydrocarbon solution can be repeated one or more times, and the succinate is added during one or more of these treatments.

In any of these preparation methods the desired succinate can be added as such or, in an alternative way, it can be obtained *in situ* by using an appropriate precursor capable to be transformed in the desired electron donor compound by means, for example, of known chemical reactions such as esterification, transesterification. Generally,

the succinate of formula (I) is used in molar ratio with respect to the MgCh of from 0.01 to 1 preferably from 0.05 to 0.5.

The alkyl-Al compound (b) is preferably selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Ch$.

The silicon compound (c) of formula $R^1Si(OR)_3$ is used as external electron donor and is selected from the compounds in which R is a $C_1$-$C_4$ linear alkyl, preferably methyl or ethyl.

The group $R^1$ is t-butyl, thexyl (2,3-dimethyl-2-butyl), 2,3-dimethyl-2-pentyl.

Silicon compounds in which the branched alkyl is thexyltrimethoxysilane is the most preferred.

The catalyst of the invention is able to polymerize any kind of $CH_2$=CHR olefins in which R is hydrogen or a CI-CIO hydrocarbon group. However, as mentioned above it is particularly suited for the preparation of propylene polymers having melt flow rate higher than 30g/10', preferably higher than 50 and more preferably higher than 70 g/10' coupled with a MWD (expressed as polydispersity index determined as described hereinafter) higher than 5, preferably higher than 5.3 and more preferably higher than 6.

Such propylene polymers which can also be characterized by a xylene insoluble fraction at room temperature higher than 93%wt and preferably higher than 94%wt, can be used as such for a variety of applications or, most commonly, included as the crystalline component, in the heterophasic compositions which comprise, in addition to the said crystalline portion, also a fraction comprising ethylene copolymers with propylene and/or higher alpha-olefins usually in the range of from 10 to 90%wt containing from 20 to 80 % by weight of ethylene. Such ethylene copolymers have a xylene solubility at room temperature higher than 50% wt, preferably higher than 70% and more preferably higher than 80%.wt.

When included in such compositions the propylene polymers have a MFR higher than 80 g/10'and preferably higher than 100 g/10' and especially in the range 100-170 g/10' while the whole heterophasic composition can have a melt flow rate ranging from 20 to 60 g/10. When an extremely high fluidity is necessary the isotactic propylene polymers included in the heterophasic composition can reach values in the range 200-400 g/10' with a MFR range for the whole composition being from 60 to 150 g/10' and preferably from higher than 100g/10' to 150 g/10' more preefrably from 120 to 150 g/10'. The heterophasic compositions so prepared are endowed with a good stiffness/impact resistance balance and excellent spiral flow characteristics.

Any kind of polymerization process can be used with the catalysts of the invention that are very versatile. The polymerization can be carried out for example in slurry using as diluent a liquid inert hydrocarbon, or in bulk using the liquid monomer (propylene) as a reaction medium, or in solution using either monomers or inert hydrocarbons as solvent for the nascent polymer. Moreover, it is possible to carry out the polymerization process in gas-phase operating in one or more fluidized or mechanically agitated bed reactors.

The process of the present invention is particularly advantageous for producing said isotactic propylene polymers with high fluidity in liquid phase because in such a type of process the pressure problems connected to the use of increased amounts of hydrogen is more evident. As mentioned, the liquid phase process can be either in slurry, solution or bulk (liquid monomer). This latter technology is the most preferred and can be carried out in various types of reactors such as continuous stirred tank reactors, loop reactors or plug-flow ones. The polymerization is generally carried out at temperature of from 20 to 120 °C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa. According to one of the preferred process technology the heterophasic compositions containing a crystalline portion with high fluidity are prepared by first polymerizing in liquid monomer, preferably in loop reactor, propylene in the presence of hydrogen amounts able to give isotactic propylene polymer with a MFR higher than 50 g/10', then in a successive step ethylene and propylene or higher alpha-olefins are polymerized in a gas-phase in order to prepare the xylene soluble copolymer portion.

The catalyst of the present invention can be used as such in the polymerization process by introducing it directly into the reactor. In the alternative, the catalyst can be pre-polymerized before being introduced into the first polymerization reactor. The term pre-polymerized, as used in the art, means a catalyst which has been subject to a polymerization step at a low conversion degree. According to the present invention a catalyst is considered to be pre-polymerized when the amount the polymer produced is from 0.1 up to 1000 g per gram of solid catalyst component.

The pre-polymerization can be carried out with the a-olefins selected from the same group of olefins disclosed before. In particular, it is especially preferred pre-polymerizing ethylene or mixtures thereof with one or more a-olefins in an amount up to 20% by mole. Preferably, the conversion of the pre-polymerized catalyst component is from 0.2 g up to 500 g per gram of solid catalyst component.

The pre-polymerization step can be carried out at temperatures from 0 to 80 0C preferably from 5 to 50 0C in liquid or gas-phase. The pre-polymerization step can be performed in-line as a part of a continuous polymerization process or separately in a batch process. The batch pre-polymerization of the catalyst of the invention with ethylene in order to produce an amount of polymer ranging from 0.5 to 20 g per gram of catalyst component is particularly preferred.

The following examples are given in order to better illustrate the invention without limiting it.

## CHARACTERIZATION

### Determination of X.I.

2.50 g of polymer were dissolved in 250 ml of o-xylene under stirring at 135 °C for 30 minutes, then the solution was cooled to 25 °C and after 30 minutes the insoluble polymer was filtered off. The resulting solution was evaporated in nitrogen flow and the residue was dried and weighed to determine the percentage of soluble polymer and then, by difference, the xylene insoluble fraction (%).

### Melt flow rate (MFR)

Determined according to ISO 1133 (230°C, 2.16 Kg)

### Polydispersity Index (P.I.)

Determined at a temperature of 200 °C by using a parallel plates rheometer model RMS-800 marketed by RHEOMETRICS (USA), operating at an oscillation frequency which increases from 0.1 rad/sec to 100 rad/sec. The value of the polydispersity index is derived from the crossover modulus by way of the equation:

$$P.I.= 10^5/Gc$$

in which Gc is the crossover modulus defined as the value (expressed in Pa) at which G'=G" wherein G' is the storage modulus and G" is the loss modulus.

### Flexural modulus

Determined according to ISO 178

### IZOD Impact Strength

Determined according to ISO 180/1A

Spiral flow Measurement Test - The spiral flow evaluation comprises injecting molten polymer into the center of a hollow spiral mold, and measuring the total length of solidified resin to determine how far the material will flow before it solidifies under specified conditions of pressure and temperature:

| **Injection machine** | **SANDRETTO Series 7 190** |
|---|---|
| Clamping force | 190 ton |
| Screw diameter | 50 mm |
| Maximum volume of the injected | 450 cc |
| Thickness of the spiral | 2.5 mm |
| Width of the spiral | 12.7 mm |
| Melting temperature | 230°C |
| Mold Temperature | 40°C |
| Total cvcle time | 31 seconds |
| Cooling time | 20 seconds |

The spiral flow measurements are taken at four different pressures:

| Pressure Measured at Machine |
|---|
| 40 bar |
| 80 bar |

## EXAMPLES

### Propylene general polymerization procedure for solid catalyst component obtained from general procedure A

In a 4-liter autoclave, purged with nitrogen flow at 70 °C for two hours, 75 ml of anhydrous hexane containing 760mg of $AlEt_3$, of thexyltrimethoxysilane (TEAL/thexyltrimethoxysilane molar ratio 20) and 10 mg of solid catalyst component were introduced in propylene flow at 30 °C. The autoclave was closed. The amount of hydrogen reported in table 1 was added and then, under stirring, 1.2 Kg of liquid propylene were fed. The temperature was raised to 70°C in five minutes and the polymerization was carried out at this temperature for two hours. The non-reacted propylene was removed, the polymer was recovered and dried at 70 °C under vacuum for three hours and then weighed and analyzed for the determination of the Mg residues by which the activity of the catalyst is calculated.

### Polymerization procedure for the preparation of propylene heterophasic copolymers (B)

Into a liquid monomer loop polymerization reactor a propylene homopolymer (component (A)) is produced by feeding separately in a continuous and constant flow the catalyst component in a propylene flow, the aluminum triethyl (TEAL), Thexyltrimethoxysilane as external donor, hydrogen (used as molecular weight regulator) and propylene to reach the conditions reported in table 2.

The polypropylene homopolymer produced in the first reactor is discharged in a continuous flow and, after having been purged of unreacted monomers, is introduced, in a continuous flow, into the gas-phase polymerization reactor, together with quantitatively constant flow of hydrogen, ethylene and propylene in the gas state to produce a propylene/ethylene copolymer (component (B). Polymerization conditions, molar ratio of the reactants and composition of the copolymers obtained are shown in Table 2.

The polymer particles exiting the final reactor are subjected to a steam treatment to remove the reactive monomers and volatile substances, and then dried.

### General procedure for preparation of the spherical adduct

An initial amount of microspheroidal $MgCl_2 \cdot 2.8C_2H_5OH$ was prepared according to the method described in ex.2 of WO98/44009 but operating on larger scale and setting the stirring conditions so as to obtain an adduct having an average particle size of 25 $\mu$m.

### Example 1-3

Preparation of the solid catalyst component

Into a 500 mL four-necked round flask, purged with nitrogen, 250 ml of $TiCl_4$ are introduced at 0° C. While stirring, 10.0 g of microspheroidal $MgCl_2 \cdot 1.8C_2H_5OH$ (prepared according to the method described in ex.2 of USP 4,399,054 but operating at 3000 rpm instead of 10000 rpm) and 9.1 mmol of diethyl 2,3-(diisopropyl)succinate are added. The temperature is raised to 100°C and maintained for 120 min. Then, the stirring is discontinued, the solid product was allowed to settle and the supernatant liquid is siphoned off. Then the following operations are repeated twice: 250 ml of fresh $TiCl_4$ are added, the mixture is reacted at 120°C for 60 min and the supernatant liquid is siphoned off. The solid is washed six times with anhydrous hexane (6x100 mL) at 60°C.

Propylene homopolymer was prepared by carrying out a bulk polymerization according to the general polymerization procedure A. Specific polymerization conditions and polymer characteristics are reported in Table 1.

### Comparison example 1-2

Polymerizations were carried out with the same conditions of example 1 and 3 with the difference that Dicyclopentyldimethoxysilane was used instead of thexyltrimethoxysilane.

**Examples 4-5 and comparison example 6**

Heterophasic compositions were prepared according to the general polymerization procedure B using the same catalyst system described in examples 1-3 for examples 4 and 5 while in comparison example 6 it was used the catalyst system described in example 2 of EP728769. Specific polymerization conditions and polymer characteristics are reported in Table 2.

**Example 7**

A Heterophasic composition was prepared according to the general polymerization procedure B using the same catalyst system described in examples 1-3 and a higher amount of hydrogen in the first step of the polymerization. Specific polymerization conditions and polymer characteristics are reported in Table 3.

Table 1

| Example | 1 | 2 | 3 | Comp.1 | Comp.2 |
|---|---|---|---|---|---|
| $H_2$(cc) | 10000 | 15000 | 20000 | 10000 | 20000 |
| MFR (g/10’) | 100 | 190 | 340 | 45 | 161 |
| PI | 6.2 | 6.5 | 6.3 | 6.3 | 6.2 |
| Activity (Kg/g) | 58 | 50 | 47 | 43.5 | 38.5 |

Table 2

| Example | 4 | 5 | Comp. 6 |
|---|---|---|---|
| Liquid phase polymerization | | | |
| T (°C) | 75 | 70 | 80 |
| $H_2$ | | | |
| MFR(g/10’) | 115 | 250 | 250 |
| PI | 6.3 | 6.5 | 3.5 |
| XI | 97.5 | 97 | na |
| Gas-phase ethylene/propylene copolymerization | | | |
| %wt of copolymer B | 23 | 21 | 20.5 |
| %wt C2 copolymer B | 44 | 47 | 55 |
| Final Composition | | | |
| C2% total | 9.9 | 9.9 | 11.4 |
| XS | 21.9 | 21.7 | 18 |
| MFR(g/10’) | 39.5 | 75 | 100 |
| Flexural Modulus (MPa) | 1350 | 1235 | 1250 |
| Izod 23°C | 5.2 | 3.4 | 3.5 |
| Spiral flow<br>40bar<br>80bar | | <br>1125<br>1810 | <br>1070<br>1690 |

Table 3

| Example | 7 |
|---|---|
| Liquid phase polymerization | |
| T(°C) | 70 |
| $H_2$ | |
| MFR(g/10') | 330 |
| PI | 6 |
| XI | 95.3 |
| Gas-phase ethylene/propylene copolymerization | |
| %wt of copolymer B | 22 |
| %wt C2 copolymer B | 48 |
| Final Composition | |
| C2% total | 10.3 |
| XS | 22 |
| MFR(g/10') | 115 |
| Flexural Modulus (MPa) | 1140 |
| Izod 23°C | 2.6 |

## Claims

1. A process for the preparation of propylene polymers having a Polydispersity Index higher than 5 and a melt index value measured according to ISO 1133 (230°C; 2.16 Kg) higher than 30 g/10', **characterized in that** said process is carried out in the presence of a catalyst system comprising (a) a solid catalyst component containing Mg, Ti and halogen atoms and an electron donor compound selected from succinates of formula (I):

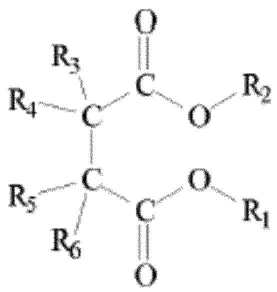

(I)

wherein the radicals $R_1$ and $R_2$, equal to or different from each other, are a $C_1$-$C_{20}$ linear or branche alkyl, alkenyl, cycloalkyl, aryl, aryl alkyl or alkylaryl group, optionally containing heteroatoms; the radicals $R_3$ to $R_6$; equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle;

(b) an alkylaluminum cocatalyst; and
(c) a silicon com compound of formula $R^1Si(OR)_3$ in which $R^1$ is a branched alkyl selected from t-butyl, thexyl (2,3-dimethyl-2-butyl), 2,3-dimethyl-2-penthyl and R is, independently, a $C_1$-$C_4$linear alkyl.

2. The process according to claim I in which the silicon compound (c) is thexyltrimethoxysilane.

## Patentansprüche

1. Verfahren zur Herstellung von Propylenpolymeren mit einem Polydispersitätsindex größer als 5 und einem gemäß ISO 1133 (230 °C; 2,16 Kg) gemessenen Schmelzindexwert größer als 30 g/10', **dadurch gekennzeichnet, dass** das Verfahren in Gegenwart eines Katalysatorsystems durchgeführt wird, umfassend (a) eine feste Katalysatorkomponente, die Mg, Ti und Halogenatome und eine Elektronendonorverbindung ausgewählt aus Succinaten der Formel (I) enthält:

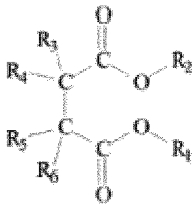

(I)

wobei die Reste $R_1$ und $R_2$ gleich oder voneinander verschieden sind und eine lineare oder verzweigte $C_1$-$C_{20}$-Alkyl-, Alkenyl-, Cycloalkyl-, Aryl-, Arylalkyl- oder Alkylarylgruppe sind, die gegebenenfalls Heteroatome enthält; die Reste $R_3$ bis $R_6$ gleich oder voneinander verschieden sind und Wasserstoff oder eine lineare oder verzweigte $C_1$-$C_{20}$-Alkyl-, Alkenyl-, Cycloalkyl-, Aryl-, Arylalkyl- oder Alkylarylgruppe sind, die gegebenenfalls Heteroatome enthalten, und die Reste $R_3$ bis $R_6$, die an das gleiche Kohlenstoffatom gebunden sind, miteinander unter Bildung eines Cyclus verknüpft sein können;

(b) einen Alkylaluminiumcokatalysator und
(c) eine Siliciumverbindung mit der Formel $R^1Si(OR)_3$, wobei $R^1$ ein verzweigtes Alkyl ausgewählt aus t-Butyl, t-Hexyl (2,3-Dimethyl-2-butyl), 2,3-Dimethyl-2-pentyl ist und R unabhängig ein lineares $C_1$-$C_4$-Alkyl ist.

2. Verfahren nach Anspruch 1, wobei die Siliciumverbindung (c) t-Hexyltrimethoxysilan ist.

## Revendications

1. Procédé pour la préparation de polymères de propylène présentant un indice de polydispersité supérieur à 5 et une valeur d'indice de fluidité à chaud, mesurée selon la norme ISO 1133 (230°C ; 2,16 kg), supérieure à 30 g/10', **caractérisé en ce que** ledit procédé est réalisé en présence d'un système catalytique comprenant (a) un constituant catalytique solide contenant Mg, Ti et des atomes d'halogène et un composé donneur d'électrons choisi parmi les succinates de formule (I) :

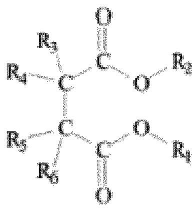

(I)

dans laquelle les radicaux $R_1$ et $R_2$, identiques ou différents l'un de l'autre, représentent un groupe alkyle, alcényle, linéaire ou ramifié, cycloalkyle, aryle, arylalkyle ou alkylaryle en $C_1$-$C_{20}$, contenant éventuellement des hétéroatomes ; les radicaux $R_3$ à $R_6$, identiques ou différents les uns des autres, représentent hydrogène ou un groupe alkyle, alcényle, linéaire ou ramifié, cycloalkyle, aryle, arylalkyle ou alkylaryle en $C_1$-$C_{20}$, contenant éventuellement des hétéroatomes, et les radicaux $R_3$ à $R_6$ qui sont liés au même atome de carbone peuvent être liés ensemble pour former un cycle ;

(b) un cocatalyseur à base d'alkylaluminium ; et
(c) un composé à base de silicium de formule $R^1Si(OR)_3$, dans laquelle $R^1$ représente alkyle ramifié choisi parmi t-butyle, t-hexyle (2,3-diméthyl-2-butyle), 2,3-diméthyl-2-pentyle et R représente, indépendamment, alkyle linéaire en $C_1$-$C_4$.

2. Procédé selon la revendication 1, dans lequel le composé à base de silicium (c) est le t-hexyltriméthoxysilane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0063261 A
- EP 640624 A
- WO 0230998 A
- EP 622380 A
- EP 86473 A
- US 4399054 A
- US 4469648 A
- EP 395083 A
- WO 9844009 A
- EP 728769 A